# EUROPÄISCHE PATENTANMELDUNG

(11) **EP 1 616 925 A1**
(43) Veröffentlichungstag der Anmeldung: **18.01.2006**
(21) Anmeldenummer: 05102849.6
(22) Anmeldetag: 07.04.2005
(51) Int. Cl.: C09D 175/04, C09D 151/08, C08G 18/63, C08F 283/00, C08L 51/08

(54) **Wässriges Mehrkomponentensystem, Verfahren zu seiner Herstellung und seine Verwendung**

(30) Priorität: 17.07.2004 DE 102004034715
(71) Anmelder: BASF Coatings AG, 48165 Münster (DE)
(72) Erfinder: Rink, Heinz-Peter, 48153, Münster (DE); Piontek, Susanne, 48165, Münster (DE); Alpert, Christine, 48161, Münster (DE); Gross, Lutz-Werner, 45721, Haltern am See (DE); Jansen, Andreas, 48165, Münster (DE)
(74) Vertreter: Fitzner, Ulrich

(57) **Zusammenfassung**

Wässriges Mehrkomponentensystem, enthaltend
(I) mindestens eine wässrige Komponente, enthaltend mindestens ein hierin gelöstes und/oder dispergiertes, isocyanatreaktive funktionelle Gruppen enthaltendes Pfropfmischpolymerisat (P) auf Polyurethanbasis, herstellbar, indem man mindestens ein Polyurethan (P'), ausgewählt aus der Gruppe, bestehend aus hydrophoben oder hydrophilen Polyurethanen, die im statistischen Mittel mindestens eine funktionelle Gruppe, ausgewählt aus der Gruppe bestehend aus Thiocarbamatgruppen, Thiolgruppen und Sulfidgruppen, aufweisen, mit mindestens einem olefinisch ungesättigten Monomer pfropfmischpolymerisiert,
   oder alternativ
(II) mindestens eine organische Komponente, enthaltend mindestens ein in Wasser lösliches und/oder dispergierbares Pfropfmischpolymerisat (P) auf Polyurethanbasis und
(III) mindestens eine wässrige Komponente
   sowie
(IV) mindestens eine Komponente, die mindestens ein Polyisocyanat enthält oder hieraus besteht

Verfahren zu ihrer Herstellung und ihre Verwendung.

## Beschreibung

Die vorliegende Erfindung betrifft ein neues wässriges Mehrkomponentensystem. Außerdem betrifft die vorliegende Erfindung ein neues
Verfahren zur Herstellung eines wässrigen Mehrkomponentensystems. Des Weiteren betrifft die vorliegende Erfindung die Verwendung des neuen wässrigen Mehrkomponentensystems und des nach dem neuen Verfahren hergestellten wässrigen Mehrkomponentensystems für die Herstellung von Beschichtungsstoffen, Klebstoffen und Dichtungsmassen zur Herstellung von Beschichtungen, Klebschichten und Dichtungen.

Wässrige Mehrkomponentensysteme, enthaltend
- mindestens eine wässrige Komponente, die mindestens ein gelöstes und/oder dispergiertes gegebenenfalls (meth)acryliertes Polyurethan mit isocyanatreaktiven funktionellen Gruppen enthält, und
- mindestens eine flüssige organische Komponente, die mindestens ein Polyisocyanat enthält oder hieraus besteht,
   sind beispielsweise aus der europäischen Patentanmeldung EP 0 952 170 A 1 oder der deutschen Patentanmeldung DE 43 26 670 A 1 bekannt.

Wässrige Mehrkomponentensysteme, die
- mindestens eine flüssige organische Komponente, die mindestens ein in Wasser lösliches und/oder dispergierbares Polyurethan mit isocyanatreaktiven funktionellen Gruppen enthält,
- mindestens eine flüssige organische Komponente, die mindestens ein Polyisocyanat enthält oder hieraus besteht, und
- mindestens eine Wasser enthaltenden Komponente
   umfassen, sind aus den deutschen Patentanmeldungen DE 44 21 823 A 1, DE 195 42 626 A 1 oder DE 198 55 125 A 1 oder der internationalen Patentanmeldung WO 97/14731 A 1 bekannt.

Die bekannten wässrigen Mehrkomponentensysteme dienen vor allem der Herstellung von Beschichtungsstoffen, wie Füller, Wasserbasislacke und Decklacke wie Unidecklacke und Klarlacke, insbesondere Unidecklacke und Klarlacke. Die bekannten Beschichtungsstoffe weisen aber immer noch einen unerwünscht hohen Gehalt an organischen Lösemitteln auf. Die hiermit hergestellten Unidecklackierungen und Klarlackierungen müssen außerdem in ihrer Lösemittelbeständigkeit und Chemikalienbeständigkeit weiter verbessert werden.

Wässrige Lösungen und/oder Dispersionen von isocyanatreaktive funktionelle Gruppen enthaltenden Pfropfmischpolymerisate auf Polyurethanbasis, die herstellbar sind, indem man mindestens ein Polyurethan, ausgewählt aus der Gruppe, bestehend aus hydrophoben oder hydrophilen Polyurethanen, die im statistischen Mittel mindestens eine funktionelle Gruppe, ausgewählt aus der Gruppe bestehend aus Thiocarbamatgruppen, Thiolgruppen und Sulfidgruppen, aufweisen, mit mindestens einem olefinisch ungesättigten Monomer pfropfmischpolymerisiert, sind aus den deutschen Patentanmeldungen DE 100 17 653 A 1, DE 100 53 890 A 1 und DE 102 23 652 A 1 bekannt. Die wässrigen Lösungen und/oder Dispersionen dienen der Herstellung von thermisch oder thermisch und mit aktinischer Strahlung (Dual-Cure-) härtbaren Beschichtungsstoffen, Klebstoffen und Dichtungsmassen, insbesondere von Wasserbasislacken. Hierbei handelt es sich aber um so genannte Einkomponentensysteme, in denen die Bindemittel neben den Vernetzungsmitteln, wie z. B. blockierte Polyisocyanate, vorliegen können, weil ihre komplementären reaktiven funktionellen Gruppen erst weit oberhalb der Raumtemperatur miteinander reagieren. Es ist nicht bekannt, ob sich die bekannten Lösungen und/oder Dispersionen der Pfropfmischpolymerisate auf Polyurethanbasis für die Herstellung von Mehrkomponentensystemen eignen. Insbesondere lässt sich den deutschen Patentanmeldungen nicht entnehmen, ob sich solche Mehrkomponentensysteme zur Herstellung von wässrigen Decklacken, wie Unidecklacke und Klarlacke, eignen, die einen niedrigen Gehalt an organischen Lösemitteln aufweisen und Decklackierungen, wie Unidecklackierungen und Klarlackierungen, liefern, die eine hohe Chemikalienbeständigkeit und Lösemittelbeständigkeit haben.

Aufgabe der vorliegenden Erfindung ist es, ein neues wässriges Mehrkomponentensystem der eingangs genannten Art bereitzustellen, das die Nachteile des Standes der Technik nicht mehr länger aufweist, sondern das einen geringeren Gehalt an organischen Lösemitteln aufweist als die aus den bekannten wässrigen Mehrkomponentensystemen hergestellten Beschichtungsstoffe, Klebstoffe und Dichtungsmassen.

Die neuen Beschichtungsstoffe, Klebstoffe und Dichtungsmassen sollen Beschichtungen, insbesondere Decklackierungen wie Klarlackierungen und Unidecklackierungen, sowie Klebschichten und Dichtungen liefern, die eine bessere Chemikalienbeständigkeit und Lösemittelbeständigkeit haben als die aus den bekannten Beschichtungsstoffen, Klebstoffen und Dichtungsmassen hergestellten.

Demgemäß wurde das neue wässrige Mehrkomponentensystem gefunden, das
(I) mindestens eine wässrige Komponente, enthaltend mindestens ein hierin gelöstes und/oder dispergiertes, isocyanatreaktive funktionelle Gruppen enthaltendes Pfropfmischpolymerisat (P) auf Polyurethanbasis, herstellbar, indem man mindestens ein Polyurethan (P'), ausgewählt aus der Gruppe, bestehend aus hydrophoben oder hydrophilen Polyurethanen, die im statistischen Mittel mindestens eine funktionelle Gruppe, ausgewählt aus der Gruppe bestehend aus Thiocarbamatgruppen, Thiolgruppen und Sulfidgruppen, aufweisen, mit mindestens einem olefinisch ungesättigten Monomer pfropfmischpolymerisiert,
   oder alternativ
(II) mindestens eine flüssige organische Komponente, enthaltend mindestens ein in Wasser lösliches und/oder dispergierbares Pfropfmischpolymerisat (P) auf Polyurethanbasis und
(III) mindestens eine wässrige Komponente
   sowie
(IV) mindestens eine flüssige organische Komponente, die mindestens ein Polyisocyanat enthält oder hieraus besteht,
   enthält und das im Folgenden als »erfindungsgemäßes Mehrkomponentensystem« bezeichnet wird.

Außerdem wurde das neue Verfahren zur Herstellung des erfindungsgemäßen Mehrkomponentensystems gefunden, bei dem man die Komponenten (I) oder (II) und (III) sowie (IV) durch Vermischen ihrer jeweiligen Bestandteile und Homogenisieren der resultierenden Mischungen herstellt, wonach man die Komponenten (I) oder (II) und (III) bis zur Verwendung des erfindungsgemäßen Mehrkomponentensystems getrennt von der Komponente (IV) lagert, und das im Folgenden als »erfindungsgemäßes Verfahren« bezeichnet wird.

Des Weiteren wurde die neue Verwendung des erfindungsgemäßen Mehrkomponentensystems und des nach dem erfindungsgemäßen Verfahren hergestellten Mehrkomponentensystems für die Herstellung von neuen Beschichtungsstoffen, Klebstoffen und Dichtungsmassen, die der Herstellung von neuen Beschichtungen, Klebschichten und Dichtungen dienen, gefunden, was im Folgenden als »erfindungsgemäße Verwendung« bezeichnet wird.

Weitere Erfindungsgegenstände gehen aus der Beschreibung hervor.

Im Hinblick auf den Stand der Technik war es überraschend und für den Fachmann nicht vorhersehbar, dass die Aufgabe, die der vorliegenden Erfindung zugrunde lag, mit Hilfe des erfindungsgemäßen Mehrkomponentensystems, des erfindungsgemäßen Verfahrens und der erfindungsgemäße Verwendung gelöst werden konnte.

Insbesondere war es überraschend, dass das erfindungsgemäße Mehrkomponentensystem und das Mithilfe des erfindungsgemäßen Verfahrens hergestellte erfindungsgemäße Mehrkomponentensystem einen geringeren Gehalt anorganischen Lösemitteln aufwies, als die bekannten Mehrkomponentensysteme.

Außerdem war es überraschend, dass bei der erfindungsgemäßen Verwendung Beschichtungen, insbesondere Decklackierungen wie Klarlackierungen und Unidecklackierungen, sowie Klebschichten und Dichtungen resultierten, die eine bessere Chemikalienbeständigkeit und Lösemittelbeständigkeit aufwiesen als die aus den bekannten Beschichtungsstoffen, Klebstoffen und Dichtungsmassen hergestellten.

Das erfindungsgemäße Mehrkomponentensystem umfasst als die wesentlichen Bestandteile zumindest die Komponenten (I) und (IV) oder alternativ (II), (III) und (IV).

Darüber hinaus kann es mindestens eine weitere Komponente (V) umfassen, wie beispielsweise die in der deutschen Patentanmeldung DE 199 04 317 A 1, Seite 3, Zeilen 6, bis Seite 8, Zeile 10, im Detail beschriebene, feinteilige, feste Komponente, die mindestens ein, insbesondere ein, gegebenenfalls wasserlösliches oder wasserdispergierbares, oligomeres und/oder polymeres Bindemittel enthält oder hieraus besteht.

Die Komponenten (I) und (IV) oder (II), (III) und (IV) sowie die gegebenenfalls vorhandenen weiteren Komponenten können auch in der Form eines Mischsystems oder Modulsystems (vgl. beispielsweise die deutsche Patentanmeldung DE 199 04 330 A 1) bereitgestellt werden, das beispielsweise mehrere unterschiedliche pigmentierte Komponenten (I) oder (II) als Basisfarben umfasst, so dass aus vergleichsweise wenigen Basisfarben mit Hilfe von Farbmischformeln Beschichtungsstoffe bereitgestellt werden können, die Beschichtungen mit den unterschiedlichsten Farbtönen und optischen Effekten liefern.

Der erfindungswesentliche Bestandteil des erfindungsgemäßen Mehrkomponentensystems ist mindestens ein, insbesondere ein Pfropfmischpolymerisat (P) auf Polyurethanbasis.

Es ist herstellbar, indem man mindestens ein Polyurethan (P'), ausgewählt aus der Gruppe, bestehend aus hydrophoben oder hydrophilen Polyurethanen, die im statistischen Mittel mindestens eine funktionelle Gruppe, ausgewählt aus der Gruppe bestehend aus Thiocarbamatgruppen, Thiolgruppen und Sulfidgruppen, aufweisen, mit mindestens einem olefinisch ungesättigten Monomer pfropfmischpolymerisiert.

Hydrophobe oder hydrophile, insbesondere hydrophile, Polyurethane (P') die im statistischen Mittel mindestens eine Thiolgruppe enthalten, sind aus der deutschen Patentanmeldung DE 100 17 653, Seite 3, Absatz [0023], bis Seite 7, Absatz [0078], sowie Seite 12, Absätze [0129] bis [0131], bekannt.

Hydrophobe oder hydrophile, insbesondere hydrophile, Polyurethane (P'), die im statistischen Mittel mindestens eine Sulfidgruppe enthalten, sind aus der deutschen Patentanmeldung DE 100 53 890 A 1, Spalte 3, Absatz [0016], Spalte 4, Absatz [0028], bis Spalte 12, Absatz [0096], sowie Spalte 22, Absatz [0151], bis Spalte 23, Absatz [0155], bekannt.

Hydrophobe oder hydrophile, insbesondere hydrophile Polyurethane (P'), die im statistischen Mittel mindestens eine Thiocarbamatgruppe enthalten, sind aus der deutschen Patentanmeldung DE 102 23 652 A 1, Spalte 3, Absatz [0019], bis Spalte 10, Absatz [0074], sowie Spalte 18, Absatz [0118], bis Spalte 19, Absatz [0120], bekannt.

Zur Herstellung der Pfropfmischpolymerisate (P) werden die Polyurethane (P') in einer wässriger Lösung oder Dispersion oder in organischer Lösung mit mindestens einem olefinisch ungesättigten Monomer gepfropft.

Die Pfropfmischpolymerisation in wässriger Lösung oder Dispersion liefert eine Primärdispersion des Pfropfmischpolymerisats (P), die direkt als Komponente (I) oder als Komponente (III) oder zu deren Herstellung eingesetzt werden kann.

Die Pfropfmischpolymerisation in organischer Lösung liefert eine organische Lösung oder Dispersion des Pfropfmischpolymerisats (P), die direkt als Komponente (II) oder zu deren Herstellung eingesetzt werden kann. Die organische Lösung oder Dispersion des Pfropfmischpolymerisats (P) kann aber auch in Wasser oder einem wässrigen Medium dispergiert werden, wodurch eine Sekundärdispersion des Pfropfmischpolymerisats (P) resultiert, die als Komponente (I) oder als Komponente (III) oder zu deren Herstellung eingesetzt werden kann.

Zu den Details wird auf die deutschen Patentanmeldungen
- DE 100 17 653 A 1, Seite 7, Absätze [0080] bis [0085], i. V. m. Seite 12, Absatz [0133], bis Seite 13, Absatz [0125],
- DE 100 53 890 A 1, Spalte 12, Absatz [0098], bis Spalte 13, Absatz [0103], i. V. m. Spalte 23, Absätze [0156] und [0157], und
- DE 102 23 652 A 1, Spalte 10, Absatz [0075], bis Spalte 11, Absatz [0081], i. V. m. Spalte 19., Absätze [0121] bis [0124],
   verwiesen.

Beispiele geeigneter olefinisch ungesättigter Monomere für die Pfropfmischpolymerisation werden in den deutschen Patentanmeldungen
- DE 100 17 653 A 1, Seite 7, Absatz [0086], bis Seite 9, Absatz [0096] i. V. m. Seite 12, Absatz [0133], bis Seite 13, Absatz [0125],
- DE 100 53 890 A 1, Spalte 13, Absatz [0104], bis Spalte 16, Absatz [0114], i. V. m. Spalte 23, Absätze [0156] und [0157], und
- DE 102 23 652 A 1, Spalte 11, Absatz [0082], bis Spalte 14, Absatz [0092], i. V. m. Spalte 19, Absätze [0121] bis [0124],
   im Detail beschrieben.

Verfahren für die Pfropfmischpolymerisation gehen aus den deutschen Patentanmeldungen
- DE 100 17 653 A 1, Seite 9, Absatz [0097], bis Seite 10, Absatz [0105] i. V. m. Seite 12, Absatz [0133], bis Seite 13, Absatz [0125],
- DE 100 53 890 A 1, Spalte 16, Absatz [0115], bis Spalte 18, Absatz [0123], i. V. m. Spalte 23, Absätze [0156] und [0157], und
- DE 102 23 652 A 1, Spalte 14, Absatz [0093], bis Spalte 16, Absatz [0101], i. V. m. Spalte 19, Absätze [0121] bis [0124],
   im Detail hervor.

Vorzugsweise liegen die Pfropfmischpolymerisate (P) in der Komponente (I) vor. Der Gehalt der Komponente (I) an Pfropfmischpolymerisaten (P) kann sehr breit variieren. Vorzugsweise liegt der Gehalt bei 5 bis 60 Gew.-%, bevorzugt 10 bis 55 Gew.-% und insbesondere 10 bis 50 Gew.-%, jeweils bezogen auf den Festkörper der Komponente (I).

Hier und im Folgenden wird unter »Festkörper« die Summe der Bestandteile des erfindungsgemäßen Mehrkomponentensystems verstanden, die den Festkörper der hieraus hergestellten Beschichtungen, Klebschichten und Dichtungen aufbauen.

Die Komponenten (I), (II) und (III), insbesondere aber die Komponente (I), können oder kann mindestens einen weiteren Bestandteil, ausgewählt aus der Gruppe, bestehend aus Pigmenten, von Polyisocyanaten verschiedenen Vernetzungsmitteln, enthaltend reaktive funktionelle Gruppen, die erst bei höheren Temperaturen mit sich selbst oder mit ihren komplementären reaktiven funktionellen Gruppen reagieren, von den Pfropfmischpolymerisaten (P) auf Polyurethanbasis verschiedenen Bindemitteln, Verbindungen mit mindestens einer reaktiven funktionellen Gruppe, die mindestens eine mit aktinischer Strahlung aktivierbare Bindung aufweist, sowie Lackadditiven, enthalten.

Unter aktinischer Strahlung wird hier und im Folgenden elektromagnetische Strahlung, wie IR-Strahlung, nahe Infrarot-Strahlung (NIR), sichtbares Licht, UV-Strahlung, Röntgenstrahlung und Gammastrahlung, insbesondere UV-Strahlung, und Korpuskularstrahlung, wie Elektronenstrahlung, Betastrahlung, Alphastrahlung, Protonenstrahlung oder Neutronenstrahlung, insbesondere Elektronenstrahlung, verstanden.

Beispiele geeigneter Pigmente und bevorzugte Mengen, in denen sie eingesetzt werden können, sind aus der deutschen Patentanmeldung DE 101 29 970 A 1, Seite 16, Absatz [0105], bis Seite 12, Absatz [0121], bekannt.

Beispiele geeigneter Vernetzungsmittel, die von den Polyisocyanaten der Komponente (IV) verschieden sind, sind aus der deutschen Patentanmeldung DE 198 55 125 A 1, Seite 13, Zeilen 7 bis 61, bekannt.

Beispiele geeigneter, von den Pfropfmischpolymerisaten (P) verschiedener Bindemittel sind aus den deutschen Patentanmeldungen DE 44 21 823 A 1, DE 195 42 626 A 1 oder DE 198 55 125 A 1, oder der internationalen Patentanmeldung WO 97/14731 A 1 bekannt.

Beispiele geeigneter Verbindungen mit mindestens einer reaktiven funktionellen Gruppe mit mindestens einer mit aktinischer Strahlung aktivierbaren Bindung sowie die Mengen, in denen sie vorzugsweise eingesetzt werden, sind aus der deutschen Patentanmeldung DE 101 29 970 A 1, Seite 11, Absätze [0101] bis [0103], bekannt.

Beispiele geeigneter Lackadditive sind ebenfalls aus der deutschen Patentanmeldung DE 101 29 970 A 1, Seite 12, Absatz [0123], bekannt.

Das erfindungsgemäße Mehrkomponentensystem enthält die flüssige organische Komponente (IV). Vorzugsweise ist die Komponente (IV) völlig frei von Wasser, bis auf die Spuren, die beispielsweise durch weitere Bestandteile der Komponente (IV) oder bei der Handhabung eingeschleppt werden.

Die Komponente (IV) enthält mindestens ein Polyisocyanat oder sie besteht hieraus. Handelt es sich um ein festes Polyisocyanat, wird die Komponente (IV) durch Zugabe organischer, vorzugsweise wassermischbarer, Lösemittel, die gegenüber Polyisocyanaten im Wesentlichen oder völlig inert sind, flüssig eingestellt.

Die wasserfreien, flüssigen Komponenten (II) enthalten mindestens ein, insbesondere ein, Polyisocyanat. Die Polyisocyanate können auch reaktive funktionelle Gruppen enthalten, die mit aktinischer Strahlung aktivierbar sind und so an der Härtung mit aktinischer Strahlung teilnehmen können. Solche Polyisocyanate werden im Folgenden als »Dual-Cure-Polyisocyanate « bezeichnet.

Beispiele geeigneter Polyisocyanate zur Verwendung in den Komponente (IV) sind aus den deutschen Patentanmeldungen
- DE 44 21 823 A 1, Seite 12, Zeilen 4 bis 35; oder
- DE 199 14 899 A 1, Seite 18, Zeile 40, bis Seite 19, Zeilen 9, und Seite 19, Zeile 67, bis Seite 20, Zeile 12;
   bekannt.

Beispiele geeigneter Dual-Cure-Polyisocyanate zur Verwendung in den Komponenten (IV) sind aus der deutschen Patentanmeldung DE 101 29 970 A 1, Seite 2, Absatz [0008], mit Verweis auf die europäische Patentanmeldung EP 0 928 800, sowie Seite 6, Abs. [0042], bis Seite 11, Abs. [0099], bekannt.

Die Komponente (IV) kann die vorstehend beschriebenen Zusatzstoffe enthalten, sofern diese unter den Bedingungen der Lagerung der Komponente (IV) im Wesentlichen oder völlig inert gegenüber Polyisocyanaten sind. Vorzugsweise werden Additive, die eine Oberflächenspannung absenkende Wirkung aufweisen, eingesetzt. Verbindungen dieser Art werden beispielsweise in der europäischen Patentanmeldung EP 0 915 116 A 1, Spalte 6, Zeilen 14 bis 30, beschrieben.

Vorzugsweise erfolgt die Herstellung des erfindungsgemäßen Mehrkomponentensystems durch das erfindungsgemäße Verfahren.

Bei dem erfindungsgemäßen Verfahren werden die Komponenten (I) oder (II) und (III) sowie (IV) durch Vermischen ihrer jeweiligen Bestandteile und Homogenisieren der resultierenden Mischungen hergestellt, wonach man die Komponenten (I) oder (II) und (III) bis zur Verwendung des erfindungsgemäßen Mehrkomponentensystems getrennt von der Komponente (IV) lagert.

Methodisch weist die Herstellung der Komponenten (I) bis (IV) keine Besonderheiten auf, sondern erfolgt durch das Vermischen und Homogenisieren der vorstehend beschriebenen Bestandteile mit Hilfe üblicher und bekannter Mischverfahren und Vorrichtungen wie Rührkessel, Rührwerksmühlen, Extruder, Kneter, Ultraturrax, In-line-Dissolver, statische Mischer, Zahnkranzdispergatoren, Druckentspannungsdüsen und/oder Microfluidizer, gegebenenfalls unter Ausschluß von aktinischer Strahlung, sofern die resultierenden Komponenten (I) bis (IV) Bestandteile enthalten, die durch aktinische Strahlung aktivierbar sind.

Die erfindungsgemäßen Mehrkomponentensysteme dienen der Herstellung von Beschichtungsstoffen, und Klebstoffen und Dichtungsmassen. Vorzugsweise dienen die erfindungsgemäßen Mehrkomponentensysteme der Herstellung von Beschichtungsstoffen bevorzugt von Füllern, Wasserbasislacken und Decklacken, besonders bevorzugt von Decklacken, insbesondere von Unidecklacken und Klarlacken. Vorzugsweise liegen die Beschichtungsstoffe, Klebstoffe und Dichtungsmassen, insbesondere die Beschichtungsstoffe, in der Formen von Öl-in-Wasser-Dispersionen vor.

Zur Herstellung der erfindungsgemäßen Beschichtungsstoffe, Klebstoffe und Dichtungsmassen, insbesondere der erfindungsgemäßen Beschichtungsstoffe, werden die Komponenten (I) und (IV) oder die Komponente (II), (III) und (IV) vor ihrer bestimmungsgemäßen Verwendung miteinander vermischt. Vorzugsweise werden dabei die Mengen der Komponenten (I) und (IV) oder (II), (III) und (IV) so gewählt, dass ein Äquivalentverhältnis von Isocyanatgruppen zu isocyanatreaktiven Gruppen von 2 : 1 bis 1 : 2, bevorzugt 1,5 : 1 bis 1 : 1,5 und insbesondere 1,2 : 1 bis 1 : 1,2 resultiert.

Die Herstellung der erfindungsgemäßen Beschichtungsstoffe weist keine methodischen Besonderheiten auf, sondern es können die vorstehend beschriebenen Verfahren und Vorrichtungen verwendet werden.

Vorzugsweise haben die erfindungsgemäßen Beschichtungsstoffe einen Festkörpergehalt, d. h. einen Gehalt an Bestandteilen, die die aus den Mischungen hergestellten Beschichtungen aufbauen, von 10 bis 90, bevorzugt 20 bis 80 und insbesondere 30 bis 70 Gew.-%, jeweils bezogen auf einen Beschichtungsstoff.

Vorzugsweise enthalten die erfindungsgemäßen Beschichtungsstoffe, bezogen auf die Gesamtmenge des darin enthaltenen Wassers und der darin enthaltenen organischen Lösemittel, mehr als 50 Gew.-%, bevorzugt mindestens 55 Gew.-% und insbesondere mindestens 60 Gew.-% Wasser, sodass die Löslichkeitseigenschaften im Wesentlichen vom Wasser geprägt werden.

Die erfindungsgemäßen Beschichtungsstoffe weisen eine Topfzeit oder Verarbeitungszeit von mehreren Stunden auf. Dies erleichtert den Anwendern die Arbeitsplanung in erheblichem Maße.

Die erfindungsgemäßen Beschichtungsstoffe sind thermisch härtbar. Dies bedeutet, dass sie bei Raumtemperatur oder bei höheren Temperaturen gehärtet werden können. Dabei können die üblichen und bekannten Vorrichtungen, wie Umluftöfen, Heißluftgebläse oder Heizstrahler, insbesondere NIR- oder IR-Strahlen oder Mikrowellenstrahler, verwendet werden.

Die erfindungsgemäßen Beschichtungsstoffe können auch thermisch und mit aktinischer Strahlung härtbar sein, was von der Fachwelt auch als Dual-Cure bezeichnet wird. Für die Härtung mit aktinischer Strahlung können die üblichen und bekannten Vorrichtungen, wie UV-Lampen oder Elektronenstrahlquellen, eingesetzt werden (vgl. auch die deutsche Patentanmeldung DE 101 29 970 A 1, Seite 13, Abs. [0132]).

Die Applikation der erfindungsgemäßen Beschichtungsstoffe weist keine methodischen Besonderheiten auf, sondern kann durch alle üblichen Applikationsmethoden, wie z.B. Spritzen, Rakeln, Streichen, Gießen, Tauchen, Träufeln oder Walzen erfolgen. Gegebenenfalls empfiehlt es sich, unter Ausschluss von aktinischer Strahlung zu arbeiten, um eine vorzeitige Vernetzung der erfindungsgemäßen Beschichtungsstoffe zu vermeiden.

Die erfindungsgemäßen Beschichtungsstoffe, Klebstoffe und Dichtungsmassen sind hervorragend für das Beschichten, Verkleben und Abdichten von Substraten jeglicher Art, insbesondere von Karosserien von Fortbewegungsmitteln, inklusive mit Motorkraft und/oder Muskelkraft betriebene Fortbewegungsmittel, wie Personenkraftwagen, Nutzfahrzeuge, Omnibusse, Fahrräder, Schienenfahrzeugen, Wasserfahrzeuge und Fluggeräte, und Teilen hiervon, von Bauwerken, Türen, Fenstern, Möbeln und Teilen hiervon, von industriellen Kleinteilen, von mechanischen, optischen und elektronischen Bauteilen sowie von Coils, Container, Emballagen, Glashohlkörpern und Gegenständen des täglichen Bedarfs, geeignet.

Insbesondere die resultierenden Beschichtungen weisen einen hervorragenden optischen Gesamteindruck (Appearance), einen hohen Glanz, eine hohe Schwitzwasserbeständigkeit, eine hervorragende Chemikalienbeständigkeit und eine hervorragende Lösemittelbeständigkeit auf.

### Beispiel

Die Herstellung eines pigmentierten Zweikomponentensystems sowie eines Zweikomponenten-Unidecklacks und einer Unidecklackierung heraus

In ein geeignet dimensioniertes Reaktionsgefäß, ausgerüstet mit Rührer, Kolonne mit Rückflusskühler, Stickstoffeinleitungsrohr, Wasserabscheider und Heizung, wurden 127,74 Gewichtsteile Isophthalsäure, 592,85 Gewichtsteile Hexahydrophtalsäureanhydrid, 449,45 Gewichtsteile Adipinsäure, 240,41 Gewichtsteile Neopentylglykol, 628,48 Gewichtsteile Hydroxypivalinsäureneopentylglycolester und 665,41 Gewichtsteile Cyclohexandimethanol-1,4 eingewogen. Unter einer Stickstoffatmosphäre wurde die Reaktionsmischung in Schritten von 10°C/h von 140°C auf 230°C erhitzt und bei 230 °C bis zu einer Säurezahl von 5,4 mg KOH/g verestert. Als Schleppmittel wurde Xylol verwendet. Nach Erreichen der Säurezahl wurde der resultierende Polyester mit Methylisobutylketon auf einen Festkörper von 90 Gew.-% eingestellt.

In einem für die Umsetzung von Isocyanaten geeigneten Reaktionsgefäß wurden zu 925,7 Gewichtsteilen (entsprechend 838,7 Gewichtsteilen Festkörper) Polyester, 312,6 Gewichtsteile Thiodiethanol, 1,2 Gewichtsteile Dibutylzinndilaurat, 1.398 Gewichtsteile Methylisobutylketon und 949,5 Gewichtsteile Isophorondiisocyanat vorgelegt, wonach die resultierende Mischung auf 105°C erwärmt wurde. Die Temperatur wurde solange gehalten, bis der Gehalt an freien Isocyanatgruppen konstant war. Anschließend wurden 244,9 Gewichtsteile Trimethylolpropan hinzu gegeben. Die resultierende Mischung wurde weiter erwärmt, bis der Gehalt an freien Isocyanatgruppen unter die Nachweisgrenze gesunken war.

530,47 Gewichtsteile (entsprechend 383 Gewichtsteilen Festkörper) des resultierenden Polyurethans (P') wurden in einem geeigneten Reaktionsgefäss, ausgerüstet mit Rührer, Rückflusskühler, zwei Zulaufgefäßen und Heizung, auf 105°C erwärmt. Aus dem ersten Zulaufgefäß wurde eine Monomermischung, bestehend aus 29,87 Gewichtsteilen Acrylsäure, 188,4 Gewichtsteilen Hydroxypropylmethacrylat, 30,64 Gewichtsteilen n-Butylacrylat, 57,45 Gewichtsteilen t-Butylcyclohexylacrylat, 38,29 Gewichtsteilen Styrol und 38,29 Trimethylcyclohexylmethacrylat, während drei Stunden zugetropft. 11,49 Gewichtsteile t-Butylperoxid-2-ethylhexanoat wurden in 96,4 Gewichtsteilen Methylisobutylketon gelöst. Die resultierende Lösung wurde während 3,5 Stunden zeitgleich beginnend aus dem zweiten Zulaufgefäß zugetropft. Nach der Zugabe wurde die Reaktionsmischung weitere 2,5 Stunden bei 105°C nachpolymerisiert. Anschließend wurde sie auf 90°C abgekühlt und während 15 Minuten mit 32,22 Gewichtsteilen Dimethylethanolamin neutralisiert. Nach weiteren 30 Minuten wurden 1.094,1 Gewichtsteile Wasser innerhalb einer Stunde zudosiert. Abschließend wurde das organische Lösemittel aus der resultierenden Dispersion des Pfropfmischpolymerisats (P) durch Vakuumdestillation entfernt. Die Dispersion wies einen Festkörpergehalt von 40 Gew.-% auf. Das zahlenmittlere Molekulargewicht des Pfropfmischpolymerisats (P) lag bei 29.653 Dalton, das massenmittlere Molekulargewicht bei 5.794 (ermittelt durch Gelpermeationschromatographie mit Polystyrol als internem Standard).

Zur Herstellung der Komponente (I) des Zweikomponenten-Unidecklacks wurden in einem Dissolver bei einer Drehzahl von 2.000/min 55 Gewichtsteile der Dispersion mit 1,28 Gewichtsteilen eines handelsüblichen Netzmittels (Surfynol 104 als 52% Lösung in Butylglykol), 0,16 Gewichtsteilen Borchigel® PW 25 (handelsüblicher Verdicker der Firma Borchers), 1,07 Gewichtsteilen Baysilone® 3469 (handelsübliches Verlaufadditiv der Firma Borchers), 8,22 Gewichtsteilen Borchigen® SN95 (handelsübliches Dispergieradditiv der Firma Borchers) und 34,27 Gewichtsteilen Titan Rutil R 706 vermischt. Die resultierende Mischung wurde während 10 Minuten weiter im Dissolver gerührt und anschließend in einer Labormühle während zwei Stunden mit SAZ-Perlen gemahlen, bis das Mahlgut eine Kornfeinheit von 3 bis 5 µm aufwies.

Die Komponente (IV) wurde durch Vermischen von 80 Gewichtsteilen Bayhydur® VPLS 2319 (hydrophiles Polyisocyanat auf der Basis von HDI-Trimer der Firma Bayer-Aktiengesellschaft) und 20 Gewichtsteilen Butoxyl hergestellt.

30 Gewichtsteile der Komponente (IV) wurden durch langsame Zugabe unter Rühren bei einer Drehzahl von 800/min mit 100 Gewichtsteilen der Komponente (I) vermischt. Die Verarbeitungsviskosität für die pneumatische Spritzapplikation des resultierenden Unidecklacks wurde durch Zugabe von 28 Gewichtsteilen Wasser eingestellt.

Der Unidecklack wurde auf Stahltafeln, die mit einer Elektrotauchlackierung und einer Steinschlagschutzgrundierung beschichtet worden waren, appliziert. Die Unidecklackschichten wurden während 30 Minuten bei Raumtemperatur und 60 Minuten bei 60°C getrocknet. Nach der forcierten Härtung während 16 Stunden bei 80°C wurden Unidecklackierungen mit einem Glanz von 80 Einheiten bei 20°erhalten. Sie widerstanden mehr als 200 Doppelhüben mit einem mit Methylethylketon getränkten Wattebausch. Sie wiesen auch keinerlei Blasen und Quellungen nach der Belastung im Konstantklima(KK)-Test auf. Die Haftung zu der Steinschlagschutzgrundierung war hervorragend. Die Tabelle gibt einen Überblick über die hervorragenden Ergebnisse der Tests der Chemikalienstabilität.

**Tabelle: Chemikalienstabilität der Unidecklackierungen**

| Test (VDA-Norm 621-412) | Oberflächenveränderungen: | | |
|---|---|---|---|
| | sofort | nach 1h | nach 24h |
| Diesel 1h, 23°C, Filter | 0 | 0 | 0 |
| | | | |
| Isopropanol 1h, 23°C, Filter | 0 | 0 | 0 |
| Motorenöl 16h, 23°C, Filter | 0 | 0 | 0 |
| | | | |
| NaOH 5%, 1h, 23°C, aufgetropft | 0 | 0 | 0 |
| | | | |
| Scheibenreiniger 1h, 23°C, Filter | 0 | 0 | 0 |
| | | | |
| Schwefelsäure 10%, 1h, 23°C, aufgetropft | 0 | 0 | 0 |
| | | | |
| Superbenzin 10 min, 23°C, Filter | 0 | 0 | 0 |
| | | | |
| Kaltreiniger, 24 Stunden, 23°C, aufgetropft | 0 | 0 | 0 |
| | | | |
| Xylol 1h, 23°C, Filter | 0 | 0 | 0 |
| | | | |
| Siliconentferner, 1h, 23°C, aufgetropft | 0 | 0 | 0 |

## Patentansprüche

1. Wässriges Mehrkomponentensystem, enthaltend
(I) mindestens eine wässrige Komponente, enthaltend mindestens ein hierin gelöstes und/oder dispergiertes, isocyanatreaktive funktionelle Gruppen enthaltendes Pfropfmischpolymerisat (P) auf Polyurethanbasis, herstellbar, indem man mindestens ein Polyurethan (P'), ausgewählt aus der Gruppe, bestehend aus hydrophoben oder hydrophilen Polyurethanen, die im statistischen Mittel mindestens eine funktionelle Gruppe, ausgewählt aus der Gruppe bestehend aus Thiocarbamatgruppen, Thiolgruppen und Sulfidgruppen, aufweisen, mit mindestens einem olefinisch ungesättigten Monomer pfropfmischpolymerisiert,
oder alternativ
(II) mindestens eine organische Komponente, enthaltend mindestens ein in Wasser lösliches und/oder dispergierbares Pfropfmischpolymerisat (P) auf Polyurethanbasis und
(III) mindestens eine wässrige Komponente
sowie
(IV) mindestens eine Komponente, die mindestens ein Polyisocyanat enthält oder hieraus besteht.

2. Wässriges Mehrkomponentensystem nach Anspruch 1, **dadurch gekennzeichnet, dass** die Komponenten (I), (II) und/oder (III) mindestens einen weiteren Bestandteil, ausgewählt aus der Gruppe, bestehend aus Pigmenten, von Polyisocyanaten verschiedenen Vernetzungsmitteln, enthaltend reaktive funktionelle Gruppen, die erst bei höheren Temperaturen mit sich selbst oder mit ihren komplementären reaktiven funktionellen Gruppen reagieren, von den Pfropfmischpolymerisaten (P) auf Polyurethanbasis verschiedenen Bindemitteln, Verbindungen mit mindestens einer reaktiven funktionellen Gruppe, die mindestens eine mit aktinischer Strahlung aktivierbare Bindung aufweist, sowie Lackadditiven, enthält.

3. Wässriges Mehrkomponentensystem nach Anspruch 1 oder 2, **dadurch gekennzeichnet, dass** die Komponente (III) mindestens ein Pfropfmischpolymerisat (P) auf Polyurethanbasis enthält.

4. Wässriges Mehrkomponentensystem nach einem der Ansprüche 1 bis 3, **dadurch gekennzeichnet, dass** die Komponente (IV) mindestens ein Additiv mit Oberflächenspannung absenkender Wirkung enthält.

5. Wässriges Mehrkomponentensystem nach einem der Ansprüche 1 bis 4, **dadurch gekennzeichnet, dass** die wässrige Komponente (I) und/oder die Komponente (II) reaktive funktionelle Gruppen mit mindestens einer mit aktinischer Strahlung aktivierbare Bindung enthält oder enthalten.

6. Wässriges Mehrkomponentensystem nach einem der Ansprüche 1 bis 5, **dadurch gekennzeichnet, dass** es noch mindestens eine weitere Komponente (V) umfasst.

7. Verfahren zur Herstellung des wässrigen Mehrkomponentensystems gemäß einem der Ansprüche 1 bis 6, **dadurch gekennzeichnet, dass** man die Komponenten (I) oder (II) und (III) sowie (IV) durch Vermischen ihrer jeweiligen Bestandteile und Homogenisieren der resultierenden Mischungen herstellt, wonach man die Komponenten (I) oder (II) und (III) bis zur Verwendung des erfindungsgemäßen Mehrkomponentensystems getrennt von der Komponente (IV) lagert.

8. Verwendung des wässrigen Mehrkomponentensystems gemäß einem der Ansprüche 1 bis 6 und des mit Hilfe des Verfahrens gem. Anspruch 8 hergestellten wässrigen Mehrkomponentensystems für die Herstellung von Beschichtungsstoffen, Klebstoffen und Dichtungsmassen.

9. Verwendung nach Anspruch 8, **dadurch gekennzeichnet, dass** die Beschichtungsstoffen der Herstellung von Beschichtungen, die Klebstoffen der Herstellung von Klebschichten und die Dichtungsmassen zur Herstellung von Dichtungen auf und in Substraten dienen.

10. Verwendung nach Anspruch 9, **dadurch gekennzeichnet, dass** es sich bei den Substraten um Karosserien von Fortbewegungsmitteln oder Teilen hiervon, Bauwerke, Möbel, Fenster und Türen und Teilen hiervon, industrielle Kleinteile, Coils, Container, Emballagen, weiße Ware, Folien, optische Bauteile, elektrotechnische Bauteile, mechanische Bauteile sowie Glashohlkörper handelt.
